# EUROPÄISCHE PATENTSCHRIFT

(11) **EP 4 134 635 B1**
(45) Veröffentlichungstag und Bekanntmachung des Hinweises auf die Patenterteilung: **24.01.2024**
(21) Anmeldenummer: 22185189.2
(22) Anmeldetag: 15.07.2022
(51) Int. Cl.: G01F 1/36, G01F 1/46, G01F 1/684, G01F 5/00

(54) **BESTIMMUNG DES DURCHFLUSSES EINES STRÖMENDEN FLUIDS**
DETERMINATION OF THE FLOW RATE OF A FLOWING FLUID
DÉTERMINATION DU DÉBIT D'UN FLUIDE EN ÉCOULEMENT

(30) Priorität: 11.08.2021 DE 102021120883
(43) Veröffentlichungstag der Anmeldung: 15.02.2023
(73) Patentinhaber: SICK AG, 79183 Waldkirch (DE)
(72) Erfinder: Albrecht, Jens, 79274 St. Märgen (DE); Künzelmann, Mario, 01187 Dresden (DE)

(56) Entgegenhaltungen:
- EP-A2- 0 588 626
- EP-A2- 2 325 464
- JP-A- H 063 172
- JP-A- H05 340 779

## Beschreibung

Die Erfindung betrifft eine Strömungsmessvorrichtung zur Bestimmung des Durchflusses eines in einer Leitung strömenden Fluids und ein Verfahren zur Durchflussmessung eines in einer Leitung strömenden Fluids nach dem Oberbegriff von Anspruch 1 beziehungsweise 14.

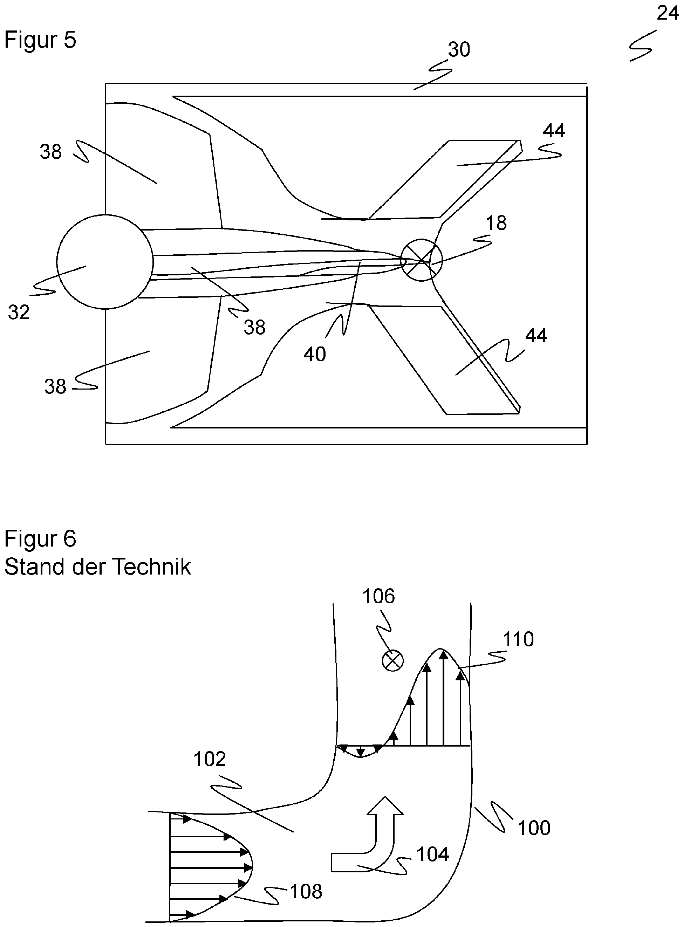

Unter den verschiedenen bekannten Technologien zur Messung der Strömungsgeschwindigkeit oder des Durchflusses eines Fluids in einer Leitung basieren einige auf einer punktuellen Messung. Dadurch wird die Messung besonders sensitiv gegenüber unterschiedlichen Einlaufbedingungen. Figur 6 illustriert dies an einer Leitung 100 bei Messung nach einer Störstelle hier in Form einer Krümmung, wodurch die Strömung des Fluids 102 wie durch den Pfeil 104 abgelenkt und gestört wird. Der Messpunkt 106 liegt hinter der Störstelle.

Ein erstes Strömungsprofil 108 vor der Störstelle ist noch ungestört und symmetrisch. Aus einer punktuellen Messung lässt sich hier problemlos auf den gesamten Strömungsquerschnitt schließen. In einem zweiten Strömungsprofil 110 hinter der Störstelle ist die Verteilung der lokalen Massenstromdichte verändert. Unter gleichen Annahmen wie bei dem ungestörten ersten Strömungsprofil 108 würde der Schluss von der punktuellen Messung auf den gesamten Strömungsquerschnitt zu einem stark abweichenden Messergebnis führen. Besonders problematisch hierbei ist, dass das zweite Strömungsprofil 110 nicht bekannt und auch nicht reproduzierbar ist. Die Abweichung zwischen den Strömungsprofilen 108, 110 erzeugt deshalb einen Messfehler, wobei durchaus Messabweichungen von ±50 % und mehr zu erwarten sind.

Ein derart punktuell messendes Verfahren ist die thermische oder kalorimetrische Durchflussmessung, die auf dem unterschiedlichen Wärmetransport eines strömenden Fluids je nach Strömungsgeschwindigkeit basiert. Dazu werden Heizelemente und Temperaturfühler in der Strömung angeordnet. Die diversen bekannten Varianten unterscheiden sich in der Art der Sonden und deren Anordnung sowie im Messverfahren.

Bei der Hitzedrahtanemometrie wird ein dünner Draht verwendet. Das Verfahren ist für schnelle lokale Durchflussschwankungen bei Atmosphärendruck geeignet, jedoch sehr anfällig gegenüber Verschmutzung. Alternative Bauweisen der Sonden in Dünnfilm-Technologie sorgen für eine größere Robustheit. Auch metallische Sonden sind bekannt, erhöhen jedoch deutlich die Ansprechzeit.

Hinsichtlich der eingebrachten Wärme gibt es unterschiedliche Regelungskonzepte. Im CCA-Verfahren (Constant Current Anemometry) wird das Heizelement einfach mit einem konstanten Strom beauftragt, und es gibt weder eine elektronische noch eine thermische Regelung. Eine etwas komplexere Ansteuerung ist das CPA-Verfahren (Constant Power Anenometry), bei der eine elektronische Regelung der Heizleistung vorgesehen ist. Ein Nachteil hieran ist, dass bei ausbleibender Wärmeabfuhr im Falle eines ruhenden Fluids das Heizelement überhitzen kann. In dem CTA-Verfahren (Constant Temperature Anenometry) ist sowohl eine elektronische als auch eine thermische Regelung implementiert. Das im Fluidstrom positionierte Heizelement wird auf eine definierte Übertemperatur oder Temperaturdifferenz gegenüber der Temperaturmessung eines separaten Temperaturfühlers geregelt. Um die Temperaturdifferenz überhaupt beurteilen zu können, wird zusätzlich die Temperatur an dem Heizelement mit einem integrierten oder dort angeordneten weiteren Temperaturfühler bestimmt. Der Massenstrom ist eine Funktion der benötigten Heizleistung, um eine geforderte Temperaturdifferenz zwischen Heizelement und Temperaturfühler einzuhalten.

In praktischen Versuchen hat sich gezeigt, dass bei einer kalorimetrischen Messung mit Dünnfilm-Technologie reproduzierbare Messergebnisse wegen des zu Figur 6 geschilderten Messfehlers ideale Einlaufbedingungen in der Größenordnung des 200-fachen des Innendurchmessers der Leitung erfordern. Diese Voraussetzung ist in zahlreichen Einbausituationen nicht gegeben.

Der herkömmliche Ersatz für eine lange, gerade Einlaufstrecke ist die Verwendung eines Strömungsführungselements. Es lassen sich verschiedene Strömungsphänomene unterscheiden. Neben dem schon in Figur 6 illustrierten Profil kann die Strömung einen Drall aufweisen und nicht zuletzt ein zeitlich veränderliches Verhalten zeigen, das unter Umständen je nach Fluid, Strömungsgeschwindigkeit und Hindernis in Turbulenzen übergeht. Das Strömungsführungselement ist je nach primärem zu kompensierendem Effekt als Strömungsumformer oder Strömungsgleichrichter ausgebildet, auch eine Profilverengung ist möglich.

Nachteilig an herkömmlichen Strömungsführungselementen ist deren erheblicher Druckverlust, an den die Wirkung auf die Strömung gekoppelt ist. Ein Druckverlust muss letztlich an irgendeiner Stelle ausgeglichen werden und verbraucht damit kontinuierlich Energie. Zudem bleibt mit Strömungsführungselementen nach dem Stand der Technik eine gewisse Beruhigungsstrecke für die Strömung vor dem Messpunkt erforderlich.

Die DE 10 2006 047 526 A1 offenbart einen Strömungsgleichrichter mit mehreren im wesentlichen rechteckigen Leitflächen in sternförmiger Anordnung, wobei die Leitflächen Durchgangsbohrungen aufweisen. In der EP 2 607 718 B1 wird ein weiterer Strömungsgleichrichter ebenfalls für eine Ultraschallmessung vorgestellt. Hier ist die Geometrie mit mehreren wechselweise in Strömungsrichtung und gegen die Strömungsrichtung gepfeilten Stegen komplexer. Außerdem wird eine Engstelle erzeugt. Die EP 1 775 560 A2 zeigt eine weitere Variante eines Strömungsgleichrichters für eine Ultraschalldurchflussmessvorrichtung. Erste und zweite Gleichrichtmittel sind zueinander entgegengesetzt verdreht mit dem Ziel, dadurch Turbulenzen zu eliminieren. Alle diese Strömungsgleichrichter sind für Ultraschallmessungen konzipiert, wo sich wegen der Ultraschallpfade das Problem einer nur punktförmigen Messung nicht stellt. Die zuvor diskutierten Nachteile des Druckabfalls werden nicht angesprochen und nicht gelöst.

Aus der DE 10 2008 049 891 B4 ist nochmals ein Strömungsrichter für ein Ultraschallmessgerät bekannt. Durch eine unsymmetrische Steganordnung wird der Strömungsquerschnitt in mehrere Teilquerschnitte unterteilt. Eine turbulente Strömung soll nahezu ungestört passieren können, während eine laminare Strömung in eine turbulente Strömung verwirbelt wird. Dadurch soll nahezu kein Druckverlust entstehen, und es sollen keine sekundären Querströmungen induziert werden. Allerdings könnte ein einzelner Messpunkt, auf den das Ultraschallverfahren der DE 10 2008 049 891 B4 im Übrigen nicht reduziert werden kann, nur in der aufgrund des Strömungsrichters stets turbulenten Strömung angeordnet werden. Bei einem fiktiven Übergang auf ein punktuelles Messverfahren wie die kalorimetrische Durchflussmessung wären daher verlässliche, reproduzierbare Messwerte nicht erreichbar.

In der US 2005/0039809 A1 wird ein Strömungsbegrenzer beschrieben. Dessen Funktion ist, eine parabolische Strömungsfront zu begradigen. Dafür gibt es eine Vielzahl von sternförmig angeordneten Flügeln, wobei die US 2005/0039809 A1 eine aus ihrer Sicht frühere Herangehensweise mit ungleichmäßigem Abstand zwischen den Flügeln als problematisch ansieht und diese Anordnung deshalb vergleichmäßigt. Einleitend wird in US 2005/0039809 A1 das Messverfahren Hitzedraht-Anemometrie erwähnt. Die dann vorgestellten Geometrien des Strömungsbegrenzers jedoch sind für ein Differenzdruckmessverfahren entworfen und beschrieben. Dabei strömt an den Druckabgriffspunkten kein Fluid, so dass man nicht von einer Strömungsführung sprechen kann.

Die EP 2 325 464 A2 offenbart eine Messvorrichtung zum Messen einer Luftmasse einer Luftströmung in einem Frischluftkanal einer Brennkraftmaschine. Ein Luftmassensensor weist ein Strömungsführungselement auf, das eine schlitzförmige Eintrittsquerschnittsfläche, eine der Messquerschnittsfläche entsprechende Austrittsquerschnittsfläche und einen Luftführungskanal dazwischen aufweist.

In der JP H05-340779 A wird ein thermischer Durchflussmesser vorgestellt, der eine Teilstrompassage mit mehreren Schlitzen aufweist, die die Strömung dem zentral angeordneten Erfassungselement zuführen. Die Schlitze bilden in einer Ausführungsform ein Kreuz.

Die EP 0 588 626 A2 offenbart einen Luftdurchflussmesser für einen Automotor mit einem Einlass, der einen Teil der Strömung in die Nähe der Wand umleitet. Der Einlass weist in einer Ausführungsform vier kreuzförmig angeordnete und zur Strömung gerichtete Nuten auf.

Aus der JP H06-3172 A ist ein weiterer Durchflussmesser bekannt. Ein Strömungsführungselement weist vier um ein Zentrum angeordnete Einlässe auf, die sich in einem Messkanal vereinigen.

Es ist daher Aufgabe der Erfindung, die Messgenauigkeit einer gattungsgemäßen Strömungsmessvorrichtung zu verbessern.

Diese Aufgabe wird durch eine Strömungsmessvorrichtung zur Bestimmung des Durchflusses eines in einer Leitung strömenden Fluids und ein Verfahren zur Durchflussmessung eines in einer Leitung strömenden Fluids von Anspruch 1 beziehungsweise 14 gelöst. Die gemessene Größe ist häufig der Massenstrom. Bei bekanntem Fluid und bekannter Leitungsgeometrie entsprechen Massenstrom, Strömungsgeschwindigkeit, Volumenstrom oder Durchflussmenge einander beziehungsweise lassen sich ineinander umrechnen, so dass der "Durchfluss" stellvertretend für diese typischen Größen steht, die mit einer Strömungsmessvorrichtung gemessen werden. Der Bereich der Leitung, in dem gemessen wird, ist häufig durch die Strömungsmessungsvorrichtung ersetzt, die in die Leitung eingebaut ist. Auf diesen Unterschied wird nicht weiter eingegangen und vereinfachend die Bezeichnung Leitung weiterverwendet.

Ein an einem Messpunkt in der Leitung angeordnetes Messelement erfasst punktuell eine Messgröße des strömenden Fluids. Eine Steuer- und Auswertungseinheit nutzt die Messgröße des Messelements, um den gesuchten Durchfluss zu bestimmen. Messpunkt oder punktuelle Erfassung bedeuten, dass nur an einem Punkt beziehungsweise im praktischen Rahmen nur auf kleinster Fläche gemessen wird. Es wird also nur ein sehr kleiner lokaler Ausschnitt des Strömungsquerschnitts erfasst, in der Messung selbst findet keine Mittelung über das Strömungsprofil statt. Dazu im Gegensatz wären beispielsweise Ultraschallpfade nicht punktuell oder 0-dimensional, sondern mindestens 1-dimensional, wobei häufig mehrere Ultraschallpfade genutzt würden, um den Strömungsquerschnitt besser abzubilden.

Dem Messpunkt ist bezüglich der Strömungsrichtung des Fluids ein Strömungsführungselement vorgeordnet. Herkömmlich würde ein solches Strömungsführungselement, wie einleitend diskutiert, für eine reproduzierbare und gleichmäßige Strömung sorgen und sozusagen Verhältnisse wie in einer fiktiven Einbausituation schaffen, als ginge der Strömungsmessvorrichtung eine längere, gerade und ungestörte Einlaufstrecke voraus. Erfindungsgemäß hat das Strömungsführungselement eine andere Funktion, wie sogleich erläutert.

Die Erfindung geht von dem Grundgedanken aus, an dem Messpunkt für eine Messsituation zu sorgen, die repräsentativ für das Strömungsprofil ist. Das Strömungsführungselement ist dafür so ausgestaltet, dass es dem Messpunkt Anteile der Strömung zuführt, die auch für die übrige Strömung repräsentativ sind. Die Strömung als Ganzes wird dabei möglichst unverändert belassen, eine Beruhigung oder dergleichen der gesamten Strömung wird ausdrücklich nicht angestrebt und nicht erreicht. Das Strömungsführungselement fungiert als eine Art Strömungsabgreifer, mit dem der besagte repräsentative Teil der Strömung ausgeschnitten und auf den Messpunkt geleitet wird. An dem Messpunkt kann daher stellvertretend für das gesamte Strömungsprofil eine lokale Massenstromdichte gemessen werden. Ohne das erfindungsgemäße Strömungsführungselement würde am Messpunkt nur die dort auftreffende, sehr kleine innere Teilströmung erfasst, die insbesondere hinter einer Störstelle erhebliche Abweichungen und Schwankungen zu einer unterstellten mittleren Strömung zeigen kann. Dies wurde einleitend unter Bezugnahme auf die Figur 6 erläutert.

Die Erfindung hat den Vorteil, dass eine deutlich reduzierte Empfindlichkeit gegenüber auch ungünstigen Einlaufbedingungen erreicht wird. Eine ausgedehnte ungestörte Einlaufstrecke, deren Länge nach der einleitenden Diskussion durchaus mehr als 200 Innendurchmesser betragen müsste, ist nicht mehr erforderlich. Dabei wird jedoch nicht wie mit herkömmlichen Strömungsumformern oder Strömungsgleichrichtern versucht, die Strömung als solche zu beruhigen, so dass sie sich verhält, als gäbe es diese Einlaufstrecke. Vielmehr wird nur ein kleiner, aber repräsentativer Teil der Strömung abgegriffen und beeinflusst. Dementsprechend tritt erfindungsgemäß nur ein wesentlich verringerter Druckverlust auf. Am Messpunkt erfolgt eine physikalische Mittelung eines unsymmetrischen Strömungsprofils, so dass die Messung dank des erfindungsgemäßen Strömungsführungselements wesentlich genauer wird.

Das Messelement weist bevorzugt für eine kalorimetrische Durchflussmessung mindestens ein Heizelement und mindestens einen Temperaturfühler auf. Somit entsteht eine kalorimetrische Strömungsmessvorrichtung. Das ist ein verbreitetes und einfaches Verfahren, das nur punktuell misst. Das Messverfahren kann auch als thermische Durchflussmessung oder thermische Anemometrie bezeichnet werden, wobei einige speziellere Ausprägungen einleitend kurz beschrieben wurden. Der mindestens eine Temperaturfühler kann in das mindestens eine Heizelement integriert oder als separates Bauelemente bei dem Heizelement angeordnet sein. Der Durchfluss bestimmt sich aus der Temperatur und/oder Heizleistung oder einer daraus abgeleiteten Größe.

Die Steuer- und Auswertungseinheit kann je nach Ausführungsform dafür ausgebildet sein, das mindestens eine Heizelement mit einem konstanten Strom zu beaufschlagen, dessen Heizleistung an sich oder dessen Heizleistung so zu regeln, dass die Temperatur an dem Heizelement um eine vorgegebene Temperaturdifferenz von der Temperaturinformation des mindestens einen Temperaturfühlers abweicht. Das entspricht den einleitend erläuterten denkbaren Varianten CCA-Verfahren (Constant Current Anemometry), CPA-Verfahren (Constant Power Anenometry) und CTA-Verfahren (Constant Temperature Anemometry).

Besonders bevorzugt ist das mindestens eine Heizelement und/oder der mindestens eine Temperaturfühler in Dünnfilmtechnik hergestellt. Dadurch ergeben sich günstige und zugleich verlässliche und robuste Bauteile, die ein reproduzierbares Heizen beziehungsweise Temperaturmessen ermöglichen.

In einer alternativen Ausführungsform weist das Messelement ein Druckmesselement auf. Das ist ein anderes Beispiel einer Durchflussmessung, die auf einer punktuellen Messung an einem Messpunkt basiert. Beispielsweise ist die Strömungsmessvorrichtung als ein Pitotrohr beziehungsweise eine Staudrucksonde ausgebildet.

Der Messpunkt ist bevorzugt innerhalb des Strömungsführungselements angeordnet oder folgt unmittelbar auf das Strömungsführungselement. Erfindungsgemäß ist anders als bei herkömmlichen Strömungsumformern oder Strömungsgleichrichtern keine oder jedenfalls nur eine äußerst kurze nachgelagerte Berührungsstrecke erforderlich.

Das Strömungsführungselement weist bevorzugt mindestens eine Öffnung auf, um einen zu dem repräsentativen Anteil komplementären, unbeeinflussten Anteil des Fluids durchzulassen. Dem Messpunkt wird erfindungsgemäß nur ein repräsentativer Anteil der Strömung zugeführt. Die übrige Strömung bleibt vorzugsweise unbeeinflusst und strömt einfach durch die mindestens eine Öffnung. Eine Strömungsbeeinflussung oder strömungsberuhigende Strömung insgesamt ist gar nicht angestrebt. Indem ein unbeeinflusster Anteil des Fluids durchgelassen wird, kann der Druckabfall besonders gering gehalten werden.

Der repräsentative Anteil entspricht vorzugsweise höchstens 75 %, höchstens 60 %, höchstens 50 %, höchstens 40 %, höchstens 30 %, höchstens 25 %, höchstens 20 %, höchstens 10 % oder höchstens 5 % des Querschnitts des strömenden Fluids. Mit diesen Zahlenwerten wird der repräsentative Anteil quantifiziert, d. h. welcher repräsentative Anteil des Querschnitts der Strömung wird auf den Messpunkt gelenkt und welcher komplementäre, unbeeinflusste Anteil wird einfach durchgelassen. Vorzugsweise überwiegt der unbeeinflusste Anteil für einen möglichst geringen Druckabfall, unter der Bedingung, dass der repräsentative Anteil das Strömungsprofil noch ausreichend abbildet. Weitere Anteile, etwa verursacht durch Wanddicken des Strömungsführungselements, sind dabei vernachlässigt.

Das Strömungsführungselement weist mehrere speichenartig angeordnete Arme mit Führungsschlitzen zum Abgreifen des repräsentativen Anteils auf. Die Arme erstrecken sich radial über den ganzen Leitungsquerschnitt und erfassen damit in der radialen Richtung das gesamte Strömungsprofil. Durch mehrere Arme werden verschiedene Umfangsrichtungen des Strömungsprofils berücksichtigt. Das sorgt dafür, dass der repräsentative Anteil in der Tat stellvertretend für das vollständige Strömungsprofil stehen kann.

Die Führungsschlitze sind bevorzugt in Längsrichtung der Leitung als Führungskanäle auf den Messpunkt fortgesetzt. Die Führungsschlitze bezeichnen den Einlass für den repräsentativen Anteil in einem vordersten, in die Strömung gerichteten Bereich des Strömungsführungselements. Innerhalb des Strömungsführungselements, in Strömungsrichtung, sind Führungskanäle mit diesem jeweiligen Einlass gebildet, die die verschiedenen aufgenommenen Teilströmungen des repräsentativen Anteils weiterleiten und die gemeinsam in dem Messpunkt münden, wobei sie auch schon vorher zusammengeführt sein können.

Das Strömungsführungselement weist bevorzugt vier zu einem Kreuz angeordnete Arme auf. Die Arme sind von einem Zentrum ausgehend gedacht, das vorzugsweise, aber nicht zwingend mittig im Leitungsquerschnitt liegt. Diese Geometrie ist ein guter Kompromiss, um einen repräsentativen Anteil zum Messpunkt zu leiten und große Öffnungen für einen komplementären, unbeeinflussten Anteil freizulassen. Außerdem hat ein bevorzugt regelmäßiges Kreuz mit zumindest in etwa senkrecht zueinander stehenden Armen besondere Vorteile, weil es die Strömung in beiden radialen Hauptrichtungen gut abbildet, insbesondere bei Anordnung der Strömungsmessvorrichtung nach einer 90°-Krümmung der Leitung.

Das Strömungsführungselement weist bevorzugt mehrere Stützelemente im Winkelversatz zu den Armen auf, insbesondere jeweils ein Stützelement mittig zwischen zwei Armen. Die Stützelemente dienen der mechanischen Stabilisierung des Strömungsführungselements in der Strömung. Sie sollten bei noch ausreichender Festigkeit möglichst wenig Strömungsquerschnitt einnehmen. Bei mittiger Anordnung zwischen zwei Armen bleibt die Strömung wie erwünscht weitgehend unverändert. In einer Kreuzanordnung der Arme beispielsweise bilden die Stützen ein weiteres Kreuz, das um 45° verdreht ist. Im Gegensatz zu den Armen weisen die Stützen keine Führungsschlitze oder Führungskanäle auf, sie tragen nicht dazu bei, den repräsentativen Anteil der Strömung abzugreifen.

Das Strömungsführungselement weist bevorzugt ein zentrales Abblockelement auf. Das zentrale Abblockelement liegt gerade stromauf des Messpunkts und blockt ein direktes Anströmen des Messpunkts ab. Andernfalls könnte eine zentrale, direkte Teilströmung auf den Messpunkt den repräsentativen Anteil in unerwünschter Weise dominieren. In einer Ausführungsform des Strömungselements mit Armen bildet das Abblockelement vorzugsweise deren geometrisches Zentrum.

Das Strömungsführungselement weist bevorzugt einen zentralen Führungskanal zu dem Messpunkt hin auf. Der zentrale Führungskanal liegt vorzugsweise hinter dem zentralen Abblockelement, so dass Fluid hier nicht direkt einströmen kann. Von den Armen kommende Führungskanäle münden vorzugsweise in dem zentralen Führungskanal.

Der Messpunkt ist bevorzugt außermittig angeordnet. Die vordere Front des Strömungsführungselements ist vorzugsweise noch symmetrisch zu einer Mittenlängsachse der Leitung. Innerhalb des Strömungsführungselements muss diese Symmetrie nicht aufrechterhalten werden. Ein Messelement an einem außermittigen Messpunkt, das also einen radialen Versatz zum Mittelpunkt eines Leitungsquerschnitts aufweist, ist von außen her leichter erreichbar und anschließbar. Alternativ ist möglich, das Strömungsführungselement insgesamt symmetrisch auszubilden. Das ist strömungstechnisch womöglich noch günstiger, aber dann muss das Messelement zentrisch liegen und entsprechend angeschlossen werden.

Die Führungskanäle sind vorzugsweise nicht symmetrisch zu einer Mittenlängsachse der Leitung ausgebildet. Wie soeben erwähnt, kann die Symmetrie innerhalb des Strömungsführungselements aufgegeben werden. Die Führungskanäle erreichen so trotz eines an vorderster Front noch symmetrischen Aufbaus des Strömungsführungselements einen außermittigen Messpunkt.

Das Strömungsführungselement ist bevorzugt in einem ersten sich dem anströmenden Fluid darbietenden Querschnitt symmetrisch zum Mittelpunkt des Leitungsquerschnitts ausgebildet. Dies wiederholt noch einmal die vorteilhafte Eigenschaft einer symmetrischen vorderen Front des Strömungsführungselements. Speziell bei einer Ausführungsform mit einem Kreuz mit vier Armen ergibt sich damit insgesamt eine Geometrie eines regelmäßigen, zentrierten Kreuzes in dem ersten sich dem anströmenden Fluid darbietenden Querschnitt. Innerhalb des Strömungsführungselements wird dann auf dem einen Durchmesser der eine Arm verkürzt und der andere verlängert, beziehungsweise deren Führungskanäle nehmen einen entsprechenden Verlauf. In den anderen beiden Armen auf dem Durchmesser quer dazu erhalten die Führungskanäle eine gemeinsame, zu dem Messpunkt gerichtete Komponente.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Überblickdarstellung einer Strömungsmessvorrichtung in einem Längsschnitt einer Leitung mit strömendem Fluid;
- Fig. 2: eine Vorderansicht eines Strömungsführungselements;
- Fig. 3: eine Rückansicht des Strömungsführungselements;
- Fig. 4: einen Längsschnitt des Strömungsführungselements in einer aufrechten Schnittebene;
- Fig. 5: einen Längsschnitt des Strömungsführungselements in einer liegenden Schnittebene, die um 90° gegen die aufrechte Schnittebene der Figur 4 verkippt ist; und
- Fig. 6: eine Skizze zur Veranschaulichung von Messfehlern bei punktueller herkömmlicher Messung ohne erfindungsgemäßes Strömungsführungselement.

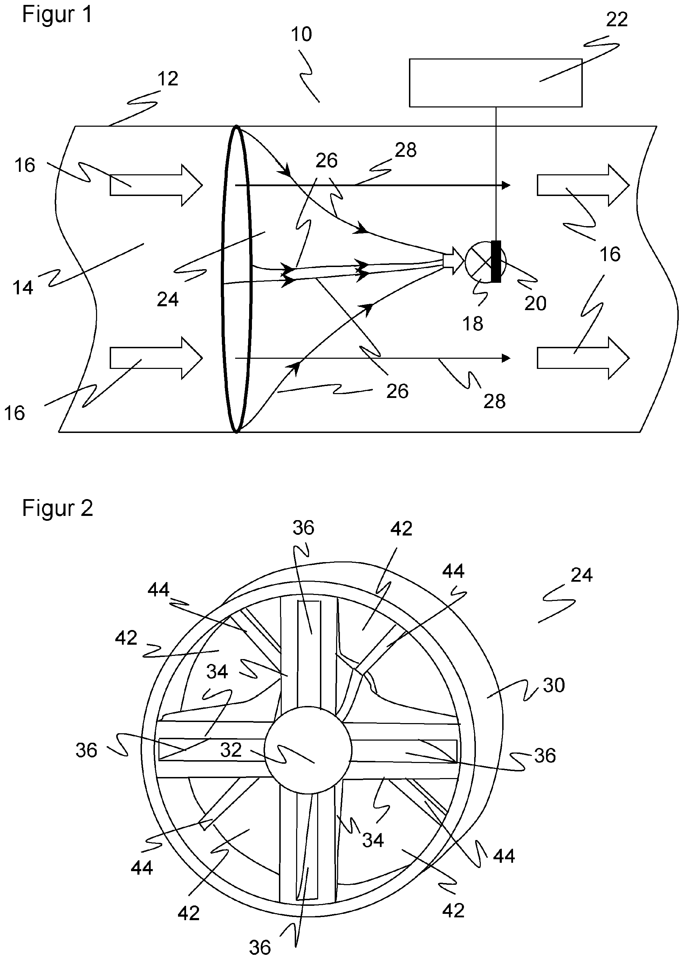

Figur 1 zeigt eine Strömungsmessvorrichtung 10 in einer Längsschnittdarstellung einer Leitung 12, in der ein Fluid 14 in der durch Pfeile 16 bezeichneten Strömungsrichtung strömt. An einem Messpunkt 18 ist ein Messelement 20 angeordnet. Damit wird eine Messgröße des Fluids 14 bestimmt, die in einer Steuer- und Auswertungseinheit 22 ausgewertet wird. Es sind verschiedene Technologien bekannt, mit denen durch eine punktuelle Messung die Strömungsgeschwindigkeit oder der Durchfluss des Fluids 14 bestimmt werden kann. Punktuelle Messung bedeutet, dass nur in dem Messpunkt 18 gemessen wird, so dass das Strömungsprofil über den Querschnitt der Leitung 12 lediglich in einem einzigen Punkt erfasst wird. Dabei ist nicht ausgeschlossen, mehrere Messelemente an mehreren Messpunkten anzuordnen, aber diese Vervielfachung des Messaufwands soll vorzugsweise vermieden werden, es also nur den einen Messpunkt 18 mit dem einen Messelement 20 geben.

Das hier genauer betrachtete Beispiel einer punktuellen Messung ist die thermische oder kalorimetrische Durchflussmessung. Eine weitere beispielhaft genannte Alternative ist eine Durchflussmessung anhand des Drucks oder Druckabfalls. Die thermische Durchflussmessung wurde einleitend schon kurz vorgestellt, die Strömungsmessvorrichtung 10 kann in dieser Hinsicht wie im Stand der Technik ausgebildet sein. Beispielsweise weist das Messelement 20 eine Unterstruktur mit mindestens einem Heizelement und mindestens einem Temperaturfühler auf, die vorzugsweise in Dünnschichttechnologie hergestellt sind. Die Steuer- und Auswertungseinheit 22 ist mit dem mindestens einen Heizelement und dem mindestens einen Temperaturfühler verbunden, um die Temperaturmessungen auszuwerten, die Heizleistung zu steuern und eine Strömungsgeschwindigkeit oder einen Durchfluss des Fluids 14 zu bestimmen. Für eine thermische Durchflussmessung kommt prinzipiell jedes bekannte Verfahren in Betracht. Beispielsweise wird bei einem CTA-Verfahren (Constant Temperature Anemometry) das Heizelement auf eine feste Übertemperatur gegenüber der Temperatur an dem Temperaturfühler geregelt. Anders ausgedrückt wird die Temperatur des unbeheizten Fluids 14 mit dem Temperaturfühler gemessen und eine bestimmte Differenztemperatur dazu als Regelgröße an dem Heizelement vorgegeben. Die dafür erforderliche Heizleistung kann anhand einer Kennlinie in einen Durchfluss umgerechnet werden.

Erfindungsgemäß ist stromaufwärts des Messpunktes 18 ein Strömungsführungselement 24 angeordnet, das in Figur 1 nur ganz schematisch dargestellt ist und später unter Bezugnahme auf die Figuren 2-5 genauer erläutert wird. Das Strömungsführungselement 24 leitet einen repräsentativen Anteil der Strömung auf den Messpunkt 18 hin, wie durch Pfeile 26 angedeutet. Repräsentativer Anteil bedeutet zum einen, dass dieser Anteil stellvertretend für die gesamte Strömung steht, an dem Messpunkt 18 somit dank des Strömungsführungselements 24 effektiv über den Strömungsquerschnitt hinweg gemittelt wird. Die nur punktuelle Messung ist dadurch in der Lage, einen Durchfluss der Strömung als Ganzes auch bei unregelmäßigem, unbekanntem oder variablem Strömungsprofil zu erfassen. Andererseits ist es nur ein Anteil der Strömung, ein weiterer komplementärer Anteil strömt zumindest weitgehend unbeeinflusst durch das Strömungsführungselement 24 und insbesondere am Messpunkt 18 vorbei, wie durch Pfeile 28 angedeutet. Dadurch wird der Druckverlust des Strömungsführungselements 24 begrenzt.

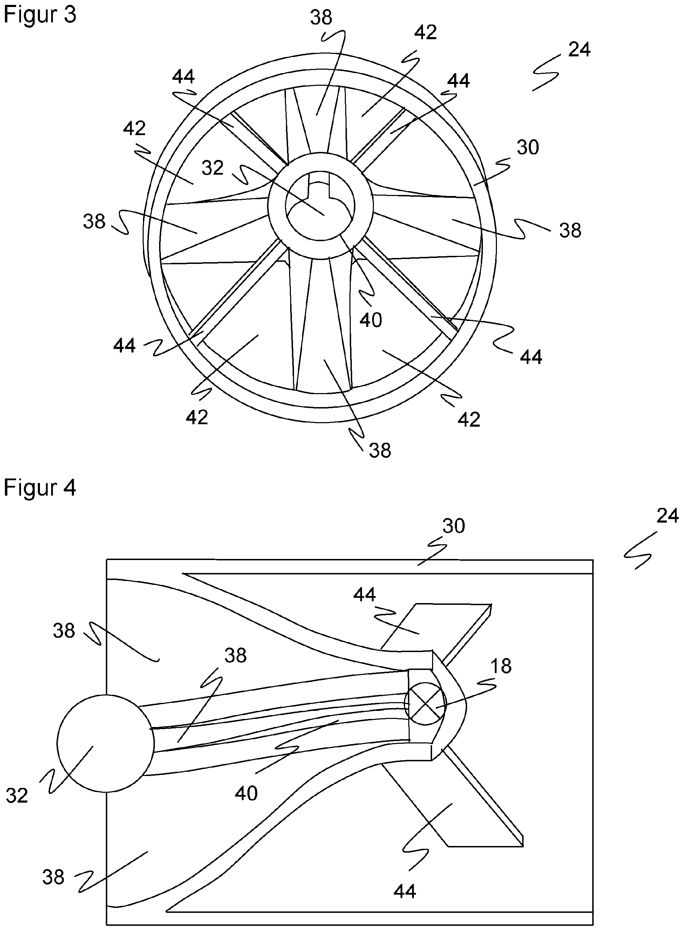

Die Figuren 2 bis 5 zeigen verschiedene Ansichten des Strömungsführungselements 24, mit denen dessen Geometrie und Funktion nun im Einzelnen erläutert wird. Dabei ist Figur 2 eine Vorderansicht, Figur 3 eine Rückansicht, Figur 4 ein Längsschnitt in einer aufrechten oder vertikalen Schnittebene und Figur 5 ein Längsschnitt in einer dazu senkrechten liegenden oder horizontalen Schnittebene.

Das Strömungsführungselement 24 wird von einem zylindrischen Rahmen 30 umgeben, dessen Außendurchmesser dem Innendurchmesser der Leitung 12 entspricht. In der vorderen Querschnittsfläche, also derjenigen am besten in Figur 2 erkennbaren Front mit Ausrichtung hin zu dem anströmenden Fluid 14, ist ein zentrales Abblockelement 32 vorgesehen, das kein Fluid 14 auf der Längsmittenachse der Leitung 12 hindurchströmen lässt. Von dem zentralen Abblockelement erstrecken sich mehrere Arme 34 radial nach außen, in der bevorzugten dargestellten Ausführungsform vier Arme 34 in einem Kreuz mit rechten Winkeln zwischen den Armen 34. Die Arme 34 weisen zur Front hin Führungsschlitze 36 auf, durch die Fluid 14 in die Arme 34 hineinströmen kann. Dafür werden die Führungsschlitze 36 innerhalb der Arme 34 im weiteren Strömungsverlauf durch Führungskanäle 38 fortgesetzt, die in den Figuren 3 bis 5 zu sehen sind. Die Führungskanäle 38 münden in einem zentralen Führungskanal 40, der bei dem Messpunkt 18 endet.

Die Frontseite des Strömungsführungselements 24 ist vorzugsweise symmetrisch, mit einem mittig angeordneten zentralen Abblockelement 32 und in dieser Querschnittsebene gleich langen Armen 34 eines regelmäßigen Kreuzes. Der Messpunkt 18 ist aber in der dargestellten Ausführungsform außermittig versetzt, ohne Beschränkung der Allgemeinheit wegen einer möglichen Drehung der Leitung 12 nach oben hin, damit das Messelement 20 leichter zugänglich wird. Der zentrale Führungskanal 40 bleibt somit nicht auf der Längsmittenachse, sondern weicht zum Messpunkt 18 hin nach oben aus. Dementsprechend wird der obere der Arme 34 auf dem aufrechten Durchmesser längs des Strömungsführungselements 24 kürzer und der untere der Arme 34 länger. In den beiden dazu quer angeordneten Armen 34 ziehen die Führungskanäle 38 nach oben, wie in Figur 3 zu erkennen. Die beschriebene und dargestellte Asymmetrie ist nur eine denkbare Ausführungsform. Alternativ kann der Messpunkt 18 zentriert angeordnet sein, also auf der Längsmittenachse der Leitung 12 liegen. Dann muss das Messelement 20 entsprechend in der Mitte angeordnet und angeschlossen werden.

Zwischen den Armen 34 weist das Strömungsführungselement 24 Öffnungen 42 auf, durch die das Fluid 14 unbeeinflusst strömen kann. Wie in den Figuren 2 und 3 zu erkennen, macht die gemeinsame Fläche dieser Öffnungen 42 einen großen Anteil der Querschnittsfläche der Leitung 12 aus. Dabei ist ein Ausgleich zwischen einem hinreichend repräsentativen Anteil der Strömung, die durch die Führungsschlitze 36 in den Armen 34 abgegriffen wird, und einem möglichst geringen Druckverlust durch große Öffnungen 42 zu finden. Für eine verbesserte mechanische Stabilität sind in den Öffnungen Stützelemente 44 angeordnet. Sie nehmen bei ausreichender Festigkeit ebenfalls möglichst wenig Querschnittsfläche ein. Eine mittige Anordnung innerhalb der Öffnungen 42 hat den geringsten Einfluss auf die Strömung. Die Stützelemente 44 bilden somit in der bevorzugten dargestellten Ausführungsform ebenfalls ein Kreuz, wie die Arme 34 und dazu um 45° verdreht.

Das Strömungsführungselement 24 greift mittels der Führungsschlitze 36 Teilquerschnitte des Strömungsprofils ab und führt diesen Teilströmungen mittels der sich an die Führungsschlitze 36 anschließenden Führungskanäle 38 und des zentralen Führungskanals 40 zu dem Messpunkt 18. Die Geometrie der Führungsschlitze 36 ist so gewählt, dass die zu dem Messpunkt 18 geleitete Teilströmung repräsentativ für den gesamten Strömungsquerschnitt ist. Die Führungsschlitze 36 erstrecken sich radial über die gesamte Leitung 12, und in Umfangsrichtung werden über die mehreren Arme 34 mehrere radiale Teilströmungen abgegriffen. Somit findet eine gute Mittelung statt. Gleichzeitig werden die Führungsschlitze 36 nicht zu groß. Das würde dazu führen, dass die Strömung sich am Messpunkt 18 unerwünscht stark beschleunigt. Außerdem würde insgesamt ein großer Druckabfall der Strömung hinter dem Strömungsführungselement 24 verursacht, da dann die Öffnungen 42, durch die das Fluid 14 ungehindert strömen kann, im Vergleich zu den Führungsschlitzen 36 zu wenig Fläche einnehmen.

Alternativ zu dem bisher erläuterten außermittigen Messpunkt 18 ist dessen zentrale Anordnung ebenfalls denkbar. Das unterstützt ein ungestörtes Vorbeiströmen der durch die Öffnungen 42 strömenden Strömungsanteile. Der Störeffekt ist aber auch bei einem außermittigen Messpunkt 18 begrenzt, zumindest solange die Frontseite symmetrisch aufgebaut bleibt und der Versatz aus dem Zentrum relativ zum Radius des Leitungsquerschnitts klein bleibt.

Die in Figur 6 dargestellte Situation mit einer 90°-Rohrkrümmung vor der Messposition kommt in der Praxis sehr häufig vor. Die Strömungsmessvorrichtung 10 würde ansonsten schräg im Raum orientiert sein. Eine solche 90°-Krümmung führt in erster Näherung zum Versatz des Schwerpunkts der Strömung ebenfalls in einem 90°-Raster. Das ist ein Grund dafür, dass eine kreuzförmige Anordnung von Armen 34 in einem gegenseitigen rechten Winkel besonders vorteilhaft ist.

In Simulationen konnte nachgewiesen werden, dass die von dem Strömungsführungselement 24 abgegriffene und zu dem Messpunkt 18 geführte Teilströmung tatsächlich repräsentativ ist, also beispielsweise nach einer 90°-Krümmung der Leitung 12 über das Strömungsprofil mittelt. Dabei wird ein sehr deutlich geringerer Druckverlust erzielt, als dies mit herkömmlichen Strömungsumformern möglich wäre, die auf eine Beruhigung der gesamten Strömung zielen.

## Patentansprüche

1. Strömungsmessvorrichtung (10) zur Bestimmung des Durchflusses eines in einer Leitung (12) strömenden Fluids (14), wobei die Strömungsmessvorrichtung (10) ein an einem Messpunkt (18) in der Leitung (12) angeordnetes Messelement (20) zur punktuellen Erfassung einer Messgröße des strömenden Fluids (14), eine Steuer- und Auswertungseinheit (22) zum Bestimmen des Durchflusses aus der Messgröße sowie ein dem Messpunkt (18) bezüglich der Strömungsrichtung vorgeordnetes Strömungsführungselement (24) aufweist, wobei das Strömungsführungselement (24) dem Messpunkt (18) einen repräsentativen Anteil (26) der Strömung zuführt,
**dadurch gekennzeichnet,**
**dass** das Strömungsführungselement (24) mehrere speichenartig angeordnete Arme (34) mit Führungsschlitzen (36) zum Abgreifen des repräsentativen Anteils (26) aufweist, dass die Arme (34) sich radial über den ganzen Leitungsquerschnitt erstrecken und dass die Führungsschlitze (36) sich radial über die gesamte Leitung (12) erstrecken.

2. Strömungsmessvorrichtung (10) nach Anspruch 1,
wobei das Messelement (18) für eine kalorimetrische Durchflussmessung mindestens ein Heizelement und mindestens einen Temperaturfühler aufweist oder wobei das Messelement (18) ein Druckmesselement aufweist.

3. Strömungsmessvorrichtung (10) nach Anspruch 1 oder 2,
wobei der Messpunkt (18) innerhalb des Strömungsführungselements (24) angeordnet ist oder unmittelbar auf das Strömungsführungselement (24) folgt.

4. Strömungsmessvorrichtung (10) nach einem der vorhergehenden Ansprüche, wobei das Strömungsführungselement (10) mindestens eine Öffnung (42) aufweist, um einen zu dem repräsentativen Anteil (26) komplementären, unbeeinflussten Anteil (28) des Fluids (14) durchzulassen.

5. Strömungsmessvorrichtung (10) nach Anspruch 4,
wobei der repräsentative Anteil (26) höchstens 75 %, höchstens 60 %, höchstens 50 %, höchstens 40 %, höchstens 30 %, höchstens 25 %, höchstens 20 %, höchstens 10 % oder höchstens 5 % des Querschnitts des strömenden Fluids (14) entspricht.

6. Strömungsmessvorrichtung (10) nach einem der vorhergehenden Ansprüche wobei die Führungsschlitze (36) in Längsrichtung der Leitung (12) als Führungskanäle (38) auf den Messpunkt (18) fortgesetzt sind.

7. Strömungsmessvorrichtung (10) nach einem der vorhergehenden Ansprüche, wobei das Strömungsführungselement (10) vier zu einem Kreuz angeordnete Arme (34) aufweist.

8. 7. Strömungsmessvorrichtung (10) nach einem der vorhergehenden Ansprüche, wobei das Strömungsführungselement (24) mehrere Stützelemente (44) im Winkelversatz zu den Armen (34) aufweist, insbesondere jeweils ein Stützelement (44) mittig zwischen zwei Armen (34).

9. Strömungsmessvorrichtung (10) nach einem der vorhergehenden Ansprüche, wobei das Strömungsführungselement (24) ein zentrales Abblockelement (32) aufweist.

10. Strömungsmessvorrichtung (10) nach einem der vorhergehenden Ansprüche, wobei das Strömungsführungselement (24) einen zentralen Führungskanal (40) zu dem Messpunkt (18) hin aufweist.

11. Strömungsmessvorrichtung (10) nach einem der vorhergehenden Ansprüche, wobei der Messpunkt (18) außermittig angeordnet ist.

12. Strömungsmessvorrichtung (10) nach Anspruch 6, wobei die Führungskanäle (38) nicht symmetrisch zu einer Mittenlängsachse der Leitung (12) ausgebildet sind.

13. Strömungsmessvorrichtung (10) nach einem der vorhergehenden Ansprüche, wobei das Strömungsführungselement (24) in einem ersten sich dem anströmenden Fluid (14) darbietenden Querschnitt symmetrisch zum Mittelpunkt des Leitungsquerschnitts ausgebildet ist.

14. Verfahren zur Durchflussmessung eines in einer Leitung (12) strömenden Fluids (14), bei dem an einem Messpunkt (18) mit einem in der Leitung (12) angeordneten Messelement (20) punktuell eine Messgröße des strömenden Fluids (14) erfasst und aus der Messgröße der Durchfluss bestimmt wird, wobei die Strömung vor dem Messpunkt (18) mit einem Strömungsführungselement (24) verändert wird, wobei das Strömungsführungselement (24) dem Messpunkt (18) einen repräsentativen Anteil (26) der Strömung zuführt,
**dadurch gekennzeichnet,**
**dass** das Strömungsführungselement (24) mehrere speichenartig angeordnete Arme (34) mit Führungsschlitzen (36) zum Abgreifen des repräsentativen Anteils (26) aufweist, dass die Arme (34) sich radial über den ganzen Leitungsquerschnitt erstrecken und dass die Führungsschlitze (36) sich radial über die gesamte Leitung (12) erstrecken.

## Claims

1. A flow measuring device (10) for determining the flow rate of a fluid (14) flowing in a line (12), the flow measuring device (10) comprising a measuring element (20) arranged at a measuring point (18) in the line (12) for the point-like detection of a measured variable of the flowing fluid (14), a control and evaluation unit (22) for determining the flow rate from the measured variable, and a flow guide element (24) arranged upstream of the measuring point (18) with respect to the direction of flow, the flow guide element (24) supplying a representative portion (26) of the flow to the measuring point (18),
**characterized in that** the flow guide element (24) comprises a plurality of arms (34) arranged in a spoke-like manner and having guide slots (36) for picking off the representative portion (26), **in that** the arms (34) extend radially over the entire line cross section, and **in that** the guide slots (36) extend radially over the entire line (12).

2. The flow measuring device (10) according to claim 1,
wherein the measuring element (18) for a calorimetric flow measurement comprises at least one heating element and at least one temperature sensor, or wherein the measuring element (18) comprises a pressure measuring element.

3. The flow measuring device (10) according to claim 1 or 2,
wherein the measuring point (18) is arranged within the flow guide element (24) or immediately follows the flow guide element (24).

4. The flow measuring device (10) according to any of the preceding claims,
wherein the flow guide element (10) comprises at least one opening (42) to let through an unaffected portion (28) of the fluid (14) complementary to the representative portion (26).

5. The flow measuring device (10) according to claim 4,
wherein the representative portion (26) corresponds to at most 75%, at most 60%, at most 50%, at most 40%, at most 30%, at most 25%, at most 20%, at most 10% or at most 5% of the cross-section of the flowing fluid (14).

6. The flow measuring device (10) according to any of the preceding claims, wherein the guide slots (36) are continued in the longitudinal direction of the conduit (12) as guide channels (38) onto the measuring point (18).

7. The flow measuring device (10) according to any of the preceding claims, wherein the flow guide element (10) comprises four arms (34) arranged in a cross.

8. The flow measuring device (10) according to any of the preceding claims, wherein the flow guide element (24) comprises a plurality of supporting elements (44) in angular relation to the arms (34), in particular one supporting element (44) each centrally between two arms (34).

9. The flow measuring device (10) according to any of the preceding claims, wherein the flow guide element (24) comprises a central blocking element (32).

10. The flow measuring device (10) according to any of the preceding claims, wherein the flow guide element (24) comprises a central guiding channel (40) towards the measuring point (18).

11. The flow measuring device (10) according to any of the preceding claims, wherein the measuring point (18) is arranged eccentrically.

12. The flow measuring device (10) according to claim 6,
wherein the guide channels (38) are not formed symmetrically with respect to a central longitudinal axis of the guide (12).

13. The flow measuring device (10) according to any of the preceding claims, wherein the flow guide element (24) is formed symmetrically with respect to the center of the conduit cross-section in a first cross-section presenting itself to the oncoming fluid (14).

14. A method for measuring the flow of a fluid (14) flowing in a conduit (12), wherein a measured variable of the flowing fluid (14) is detected point-like at a measuring point (18) by means of a measuring element (20) arranged in the conduit (12), and the flow is determined from the measured variable, the flow being varied upstream of the measuring point (18) by means of a flow guide element (24), the flow guide element (24) supplying a representative portion (26) of the flow to the measuring point (18),
**characterized in that** the flow guide element (24) comprises a plurality of arms (34) arranged in a spoke-like manner and having guide slots (36) for picking off the representative component (26), **in that** the arms (34) extend radially over the entire line cross section, and **in that** the guide slots (36) extend radially over the entire line (12).

## Revendications

1. Dispositif de mesure de débit (10) pour déterminer le débit d'un fluide (14) s'écoulant dans une conduite (12), le dispositif de mesure de débit (10) comprenant un élément de mesure (20) disposé à un point de mesure (18) dans la conduite (12) pour la détection ponctuelle d'une variable mesurée du fluide s'écoulant (14), une unité de commande et d'évaluation (22) pour déterminer le débit à partir de la variable mesurée, ainsi qu'un élément de guidage du débit (24) disposé en amont du point de mesure (18) par rapport à la direction de l'écoulement, l'élément de guidage du débit (24) alimentant au point de mesure (18) une partie représentative (26) de l'écoulement,
**caractérisé en ce que** l'élément de guidage du débit (24) comprend plusieurs bras (34) disposés en forme de rayons avec des fentes de guidage (36) pour prélever la partie représentative (26), que les bras (34) s'étendent radialement sur toute la section transversale de la conduite et que les fentes de guidage (36) s'étendent radialement sur toute la conduite (12).

2. Dispositif de mesure de débit (10) selon la revendication 1,
dans lequel l'élément de mesure (18) pour une mesure calorimétrique du débit comprend au moins un élément chauffant et au moins un capteur de température, ou dans lequel l'élément de mesure (18) comprend un élément de mesure de la pression.

3. Dispositif de mesure de débit (10) selon la revendication 1 ou 2,
dans lequel le point de mesure (18) est disposé à l'intérieur de l'élément de guidage du débit (24) ou suit immédiatement l'élément de guidage du débit (24).

4. Dispositif de mesure de débit (10) selon l'une des revendications précédentes, dans lequel l'élément de guidage du débit (10) comprend au moins une ouverture (42) pour laisser passer une partie non influencée (28) du fluide (14), complémentaire à la partie représentative (26).

5. Dispositif de mesure de débit (10) selon la revendication 4,
dans lequel la partie représentative (26) correspond à au plus 75 %, au plus 60 %, au plus 50 %, au plus 40 %, au plus 30 %, au plus 25 %, au plus 20 %, au plus 10 % ou au plus 5 % de la section transversale du fluide en écoulement(14).

6. Dispositif de mesure de débit (10) selon l'une des revendications précédentes, dans lequel les fentes de guidage (36) se poursuivent dans la direction longitudinale de la conduite (12) en tant que canaux de guidage (38) sur le point de mesure (18).

7. Dispositif de mesure de débit (10) selon l'une des revendications précédentes, dans lequel l'élément de guidage du débit (10) comprend quatre bras (34) disposés en croix.

8. Dispositif de mesure de débit (10) selon l'une des revendications précédentes, dans lequel l'élément de guidage du débit (24) comprend plusieurs éléments de support (44) décalés angulairement par rapport aux bras (34), en particulier un élément de support (44) respectivement au centre entre deux bras (34).

9. Dispositif de mesure de débit (10) selon l'une des revendications précédentes, dans lequel l'élément de guidage du débit (24) comprend un élément de blocage central (32).

10. Dispositif de mesure de débit (10) selon l'une des revendications précédentes, dans lequel l'élément de guidage du débit (24) comprend un canal de guidage central (40) vers le point de mesure (18).

11. Dispositif de mesure de débit (10) selon l'une des revendications précédentes, dans lequel le point de mesure (18) est disposé de manière excentrée.

12. Dispositif de mesure de débit (10) selon la revendication 6,
dans lequel les canaux de guidage (38) ne sont pas formés symétriquement par rapport à un axe longitudinal central de la conduite (12).

13. Dispositif de mesure de débit (10) selon l'une des revendications précédentes, dans lequel l'élément de guidage du débit (24) est formé symétriquement par rapport au centre de la section transversale du conduit dans une première section transversale se présentant au fluide entrant (14).

14. Procédé pour la mesure d'un débit d'un fluide (14) s'écoulant dans une conduite (12), dans lequel une variable de mesure du fluide s'écoulant (14) est détectée ponctuellement à un point de mesure (18) au moyen d'un élément de mesure (20) disposé dans la conduite (12), et le débit est déterminé à partir de la variable de mesure, dans lequel l'écoulement est modifié en amont du point de mesure (18) avec un élément de guidage du débit (24), l'élément de guidage du débit (24) alimentant au point de mesure (18) une partie représentative (26) de l'écoulement,
**caractérisé en ce que** l'élément de guidage du débit (24) comprend plusieurs bras (34) disposés en forme de rayons avec des fentes de guidage (36) pour prélever la partie représentative (26), que les bras (34) s'étendent radialement sur toute la section transversale de la conduite et que les fentes de guidage (36) s'étendent radialement sur toute la conduite (12).
